# NOUVEAU FASCICULE DE BREVET EUROPEEN

(11) **EP 2 179 905 B2**
(45) Date de publication et mention de la décision concernant l'opposition: **01.11.2017**
(45) Mention de la délivrance du brevet: 24.09.2014
(21) Numéro de dépôt: 09173406.1
(22) Date de dépôt: 19.10.2009
(51) Int. Cl.: B61C 3/00, B61D 1/00, B61D 1/06, B61D 3/10

(54) **Automotrice de transport de voyageurs**
Triebwagen zur Personenbeförderung
Passenger transport railcar

(30) Priorité: 24.10.2008 FR 0857231
(43) Date de publication de la demande: 28.04.2010
(73) Titulaire: ALSTOM Transport Technologies, 93400 Saint-Ouen (FR)
(72) Inventeur: Palais, M. Georges, 75009 PARIS (FR)
(74) Mandataire: Lavoix

(56) Documents cités:
- EP-A1- 0 616 935
- EP-A1- 1 024 070
- EP-A1- 1 955 917
- WO-A1-2009/021831

## Description

La présente invention concerne une automotrice de transport de voyageurs, et plus particulièrement une automotrice grande vitesse ou urbain.

Une Automotrice de transport de voyageurs est connues par le document EP-A-1 024 070.

### Art antérieur

Les architectures de train ou d'automotrices sont différenciées selon que la traction est à motorisation concentrée ou répartie, selon que les voitures les composants sont liées de manière articulée ou non articulée, selon la disposition et le nombre de bogies moteurs et porteurs, et selon qu'elles sont à un ou deux niveaux.

Les performances de ces véhicules sont liées à leurs architectures. Les constructeurs doivent donc concevoir un véhicule propre à chaque gamme de vitesse / capacité de voyageurs.

Par souci de clarté, ces différentes notions sont définies dans les paragraphes suivants.

### Train ou automotrice

Une automotrice comporte au moins une voiture motorisée, c'est-à-dire au moins une voiture comprenant au moins un compartiment voyageur et au moins une chaîne de traction. Une automotrice peut donc ne comporter que des voitures motorisées ou comporter des voitures non motorisées et au moins une voiture motorisée.

Un train est composé d'une ou de plusieurs motrices et d'un certain nombre de voitures de passagers. Une motrice n'est pas accessible aux passagers et comprend entre autres une chaîne de traction.

### Motorisation concentrée ou répartie

La chaîne de traction comprend plusieurs équipements, qui sont soit des composants électriques soit des composants électroniques de puissance et de commande, adaptés pour capter l'énergie électrique à partir d'une source de traction (par exemple une ligne caténaire), la transformer et la convertir en signaux électriques d'alimentation de moteurs électriques des bogies moteurs pour assurer l'entraînement du train ou de l'automotrice.

La motorisation est dite concentrée lorsque tous les composants des chaînes de traction sont regroupés à un emplacement unique, par exemple dans la motrice d'un train. La motorisation est dite répartie lorsque les composants de la chaîne de traction sont répartis sur plusieurs voitures, sous le châssis des voitures ou en toiture.

### Voitures articulées ou non articulées

Un bogie comprend de façon classique un châssis de bogie reposant sur deux essieux. Par essieu, on entend de façon générale une paire de roues coaxiales d'appui sur les rails d'une voie ferrée.

Un bogie moteur comprend au moins un moteur électrique d'entraînement des roues d'au moins un de ses essieux, dénommé essieu moteur. Par opposition, un bogie non motorisé est appelé bogie porteur.

Deux voitures adjacentes sont dites « articulées » (ou en liaison articulée) lorsque une première voiture est en appui par une de ces extrémités sur un bogie et que l'extrémité en vis-à-vis de la deuxième voiture repose sur l'extrémité de la première. Le bogie est donc à cheval sous les extrémités des deux voitures adjacentes. Une automotrice composée de deux voitures articulées compte donc trois bogies, puisque les extrémités libres des deux voitures reposent chacune sur un bogie et les extrémités adjacentes de ces deux voitures reposent sur un même bogie.

Par opposition, deux voitures adjacentes non articulées ne sont pas, à chacune de leurs extrémités, en appui sur un bogie commun, chaque voiture reposant sur deux bogies. Une automotrice composée de deux voitures non articulées compte donc quatre bogies.

Il existe des trains un niveau, non articulés et à motorisation concentrée dans une ou deux motrices. Du fait de la non-articulation, cette architecture présente l'inconvénient d'avoir un grand nombre de bogies ce qui augmente la résistance à l'avancement et par conséquent la consommation d'énergie de l'automotrice. Un grand nombre de bogies nécessite également de nombreuses opérations de maintenance.

De plus, tous les véhicules ferroviaires doivent respecter la contrainte de la charge à l'essieu, dont la valeur est imposée par l'infrastructure ou par les normes applicables sur les voies où circulent ces véhicules.

### Voiture à un ou deux niveaux

Une voiture est dite à un niveau lorsqu'elle a un compartiment de voyageurs sur un seul niveau de plancher, et elle est dite à deux niveaux lorsqu'elle comporte deux compartiments de voyageurs sur deux niveaux, superposés l'un au-dessus de l'autre.

Il existe aussi des automotrices à grande vitesse un niveau, non articulées et à motorisation répartie, avec différentes distributions des équipements de traction dans les voitures, différents emplacements des bogies moteurs ou des essieux moteurs selon les architectures. Ces automotrices comportent plusieurs voitures motorisées, reposant chacune sur deux bogies.

Ce type de motorisation nécessite une grande masse de câbles de puissance nécessaires pour relier le ou les dispositifs de captage d'énergie jusqu'aux moteurs en passant par chaque équipement de traction, câbles qui courent donc entre toutes les voitures équipées soit d'un dispositif de captage, soit d'un équipement de la chaîne de traction, soit d'un bogie moteur.

Il existe également des trains un niveau ou deux niveaux, à liaison « mixte » et à motorisation concentrée. Les voitures de passagers reposent sur des bogies porteurs et sont encadrées par deux motrices, à chaque extrémité du train, reposant sur des bogies moteurs. Les liaisons de ce train sont dites « mixtes » car différents types de liaisons relient les voitures et les motrices. Les voitures sont reliées entre elles par une liaison articulée, et les voitures sont reliées aux motrices par une liaison non articulée.

Cette architecture présente une capacité en nombre de passagers réduite par rapport à une automotrice de longueur identique, puisque les motrices ne sont pas accessibles aux passagers.

C'est donc un but de l'invention de proposer une automotrice qui ne présente pas les inconvénients des architectures de l'état de la technique.

A cet effet, l'invention propose une automotrice de transport de voyageurs selon la revendication 1.

L'automotrice comprend une ou plusieurs des caractéristiques optionnelles définies dans les revendications 2 à 5, prises selon toutes les combinaisons techniquement possibles.

### Description de l'invention

L'automotrice, de transport de voyageurs, selon l'invention telle que définie dans la revendication 1 est au moins partiellement à deux niveaux et à motorisation répartie. Elle comporte successivement une première voiture pilote 2, puis au moins une voiture intermédiaire 3, au moins une voiture deux niveaux 4 au moins partiellement motorisée constituant un ensemble E, puis au moins une voiture intermédiaire 3 et une seconde voiture pilote 2.

Les extrémités adjacentes des voitures deux niveaux 4 dudit ensemble E sont toutes articulées ou toutes non-articulées.

Les extrémités adjacentes de chacune des voitures 4 extrêmes dudit ensemble E et de la voiture intermédiaire 3a qui lui est adjacente sont non-articulées.

Les voitures deux niveaux 4 de l'ensemble E et les voitures intermédiaires 3a qui leurs sont immédiatement adjacentes comportent au moins un essieu motorisé.

Les voitures pilotes 2, les voitures intermédiaires 3 et les extrémités des voitures intermédiaires 3a opposées aux extrémités des voitures deux niveaux 4 de l'ensemble E de l'automotrice sont toutes articulées entre elles deux à deux. Un bogie est disposé à cheval sous les deux extrémités adjacentes de deux voitures adjacentes. Les extrémités libres des voitures intermédiaires 3a opposées aux extrémités des voitures deux niveaux 4 de l'ensemble E reposent quant à elles sur un seul bogie.

L'automotrice comporte deux à quatre chaînes de traction, au moins une chaîne de traction étant disposée dans chaque voiture deux niveaux 4 de l'ensemble E. Pour cette raison, les voitures deux niveaux 4 de l'ensemble E seront dénommées voitures motorisées. L'automotrice est donc à motorisation concentrée, la concentration s'effectuant dans une à deux voitures, qu'il y ait deux ou quatre chaînes de traction. Les voitures intermédiaires 3a immédiatement adjacentes aux voitures deux niveaux 4 de l'ensemble E comportent un bogie au moins partiellement motorisé disposé à l'extrémité libres des ces voitures intermédiaires 3a.

Chaque voiture deux niveaux 4 comportant une chaîne de traction est supportée à ses deux extrémités soit par un bogie moteur et un bogie porteur, soit par deux bogies moteurs.

L'automotrice comprend, de part et d'autre des voitures deux niveaux 4 de l'ensemble E et des voitures intermédiaires 3a immédiatement adjacentes aux voitures deux niveaux 4 de l'ensemble E, au moins une voiture intermédiaire, un ou deux niveaux, dépourvue de chaîne de traction et une voiture pilote, un ou deux niveaux, également dépourvue de chaîne de traction. Comme ces voitures intermédiaires ne comportent pas de chaîne de traction, elle sont appelées remorques.

Les remorques sont donc supportées à leurs extrémités par des bogies porteurs.

Une automotrice conforme à l'invention respecte donc une règle d'alternance d'ensembles de voitures non motorisées et d'ensembles de voitures motorisées, et une règle d'alternance de bogies moteurs et de bogies porteurs afin de respecter la charge maximale à l'essieu.

La charge à l'essieu de l'automotrice conforme à l'invention est maintenue en dessous de la charge maximale admissible car :
- Chaque voiture pilote dépourvue de chaînes de traction est en appui sur un bogie dédié et un bogie commun avec une autre voiture,.
- Les remorques également dépourvues de chaînes de traction possèdent un poids à vide plus faible que les voitures motorisées.
- Les voitures deux niveaux motorisées reçoivent des passagers et les équipements d'au moins une chaîne de traction. Or, soit les bogies dédiés moteurs à chaque extrémité de la voiture deux niveaux motorisée supportent chacun la moitié de la masse de la voiture motorisée, soit un bogie dédié et un bogie commun avec la voiture deux niveaux adjacente supportent la masse de la voiture motorisée.
- Chaque voiture intermédiaire 3a immédiatement adjacente aux voitures deux niveaux 4 d'extrémités de l'ensemble E est en appui sur un bogie dédié et un bogie commun avec une remorque, et a donc sa charge répartie sur un plus grand nombre d'essieux que les remorques. Par conséquent, une voiture intermédiaire 3a peut supporter une plus grande masse que les autres voitures sans dépasser la charge à l'essieu maximale.

L'équilibrage des masses sur chaque bogie porteur et bogie moteur est également obtenu par l'optimisation de la répartition des différents équipements de traction ou auxiliaires de l'automotrice, et de l'aménagement intérieur des voitures qui diffère selon le confort souhaité (type et nombre de sièges différents selon la classe de la voiture).

L'aménagement intérieur des voitures deux niveaux 4 motorisées notamment dépend de la masse de la ou des chaînes de traction, qui dépendent elles-mêmes des performances souhaitées de l'automotrice (traction multi-tension, vitesse maximale, etc.).

Dans le cadre de la présente invention également, si la masse des équipements traction installés est élevée, l'aménagement intérieur de la voiture deux niveaux motorisée non articulée n'aura pas besoin d'être allégé et conçu comme une voiture-bar, une voiture offrant des services ou ayant une capacité voyageur réduite par rapport à la capacité des remorques.

Chaque chaîne de traction entraîne au moins un essieu moteur du ou des bogies moteurs disposés sous l'une ou sous les deux extrémités des voitures deux niveaux 4 dans lesquelles sont disposées une ou plusieurs chaînes de traction. L'automotrice peut donc comporter trois à douze essieux moteurs, selon que chaque voiture intermédiaire partiellement motorisée sont supportées par un bogie moteur, qui comportent lui-même un ou deux essieux moteurs et que chaque voiture deux niveaux motorisée sont supportées par un ou deux bogies moteurs, qui comportent eux-même un ou deux essieux moteurs.

Un avantage de l'architecture majoritairement articulée, selon l'invention, est que l'automotrice reste plus stable en cas de déraillement. Du fait de l'architecture majoritairement articulée, la résistance à l'avancement et donc la consommation d'énergie nécessaire pour entraîner le véhicule reste limitée comparé à une automotrice entièrement non articulée de même longueur, puisqu'il y a moins de bogies. Un avantage de l'architecture partiellement non articulée, selon l'invention, est que l'automotrice présente une résistance à l'avancement proche de la résistance à l'avancement d'une rame entièrement articulée. La résistance à l'avancement et donc la consommation d'énergie nécessaire pour entraîner le véhicule du fait de son architecture partiellement non articulée, reste également limitée comparé à une automotrice entièrement non articulée de même longueur, puisque l'architecture partiellement non articulée, selon l'invention, présente un moins grand nombre de bogies. Les opérations de maintenance sont également réduites du fait de la concentration des chaînes de traction sur deux voitures. Le véhicule bénéficie encore de l'avantage consistant en une grande capacité puisque toute la longueur du véhicule est utilisée pour recevoir des passagers.

Un avantage de l'architecture partiellement non articulée est la décomposition des fonctions pilotage et absorption d'énergie, disposées dans les voitures pilote, et de la fonction traction, disposée, selon l'invention, dans les voitures deux niveaux. Une conséquence est de permettre une meilleure gestion et répartition des masses.

Un avantage de la concentration des chaînes de traction dans les voitures deux niveaux motorisées est de mieux protéger et maîtriser les incendies en séparant physiquement les chaînes de traction les unes des autres, et en séparant physiquement les chaînes de traction des compartiments passagers.

L'invention et d'autres avantages seront mieux compris à la lecture de la description qui va suivre, donnée uniquement à titre d'exemple, et faite en se référant aux dessins annexés, dans lesquels
- les figures 1, 4, et 6 sont des vues schématiques de côté d'automotrices conformes à l'invention selon plusieurs modes de réalisation,
- les figures 2, 3, 5, 7 et 10 sont des vues schématiques de côté d'automotrices ne faisant pas partie de l'invention,
- les figures 8 et 9 représentent schématiquement différente version concernant la position des essieux moteurs ou porteurs et la position des chaînes de traction.

Par convention, les roues des essieux moteurs sont noircies sur les figures.

Par convention, les roues des essieux moteurs sont noircies sur les figures.

### Premier mode de réalisation

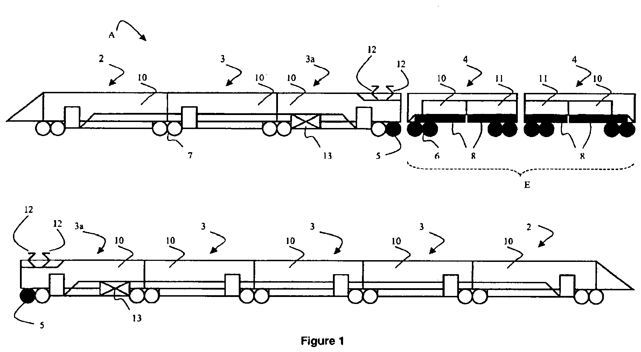

Telle que représentée sur la figure 1, une automotrice A comprend quatre remorques 3, deux voitures intermédiaires 3a et une voiture deux niveaux motorisées 4 disposées entre deux voitures pilotes 2.

Une première voiture pilote 2 est située à une première extrémité de l'automotrice A (en partant de la gauche sur la figure 1). Elle présente une extrémité libre, où est située une cabine de conduite 9, et repose sur un bogie porteur 7 composés de deux essieux porteurs.. A son extrémité opposée, la voiture pilote 2 est articulée avec une première remorque 3. Les deux extrémités en vis-à-vis des voitures 2 et 3 reposent sur un seul bogie porteur 7, composé de deux essieux porteurs.

La première remorque 3 partage donc à sa première extrémité un bogie porteur 7 avec la voiture pilote 2, et partage à son autre extrémité un bogie porteur 7 avec une première voiture intermédiaire 3a adjacente.

La première voiture intermédiaire 3a est articulée à la première remorque 3. La première voiture intermédiaire 3a partage avec la première remorque 3 un bogie porteur 7. Ni la première voiture pilote 2, ni la première remorque 3 ne reçoivent de chaîne de traction 8.

La première voiture intermédiaire 3a est en liaison non articulée à une première voiture deux niveaux motorisée 4, située dans l'automotrice de ce mode de réalisation en quatrième position en partant de la gauche. La voiture intermédiaire 3a comporte à cette extrémité non articulée un bogie dont au moins un essieu est motorisé.

La première voiture deux niveaux motorisée 4 est adjacente, en liaison non articulée, à une seconde voiture deux niveaux motorisée 4. Ces deux voitures deux niveaux motorisées 4 ont donc chacune un bogie dédié motorisé à chacune de leurs extrémités. Deux chaînes de traction 8 sont disposées sous le compartiment voyageur 10 et/ou zone de service 11 et alimentent les moteurs des bogies moteurs -composés chacun de deux essieux moteurs- situés à chaque extrémité des voitures deux niveaux motorisées 4.

Une seconde voiture intermédiaire 3a est en liaison non articulée à la seconde voiture deux niveaux motorisée 4 et est en liaison articulée avec une deuxième remorque 3.

La deuxième remorque 3 et les deux remorques 3 suivantes sont également articulées et reposent sur des bogies porteurs 7. La deuxième voiture pilote 2 est identique à la première.

Toutes les voitures 2, 3 et 3a de l'automotrice A sont soit des voitures un niveau, soit des voitures deux niveaux.

Les voitures intermédiaires 3a sont susceptibles de recevoir des équipements électriques auxiliaires 13.

Toutes les voitures 2, 3, 4 de l'automotrice A possèdent un compartiment voyageurs 10. Chacune des voitures 2, 3, 4 communique avec la ou chaque voiture adjacente par une intercirculation (non représentée). Comme le véhicule est essentiellement articulé et partiellement non articulé, l'automotrice A de la figure 1 (ou 2) possède quatorze bogies, quatre bogies motorisés 6, huit bogies porteurs 7 et deux bogies partiellement motorisés, pour une longueur d'environ 200 m. Dans ce mode de réalisation, tous les essieux des bogies moteurs des voitures deux niveaux 4 sont motorisés. Une telle automotrice peut transporter de l'ordre de 550 passagers, en fonction de l'aménagement intérieur, à une vitesse commerciale d'au moins 350 km/h.

Dans chacune des voitures deux niveaux motorisée 4, la ou les chaînes de traction 8 sont disposées sous le plancher du compartiment voyageurs 10 ou de la zone bar 11 afin de préserver la longueur du compartiment. La fig.1 représente schématiquement l'emplacement des chaînes de traction 8 sous toute la longueur des compartiments voyageurs 10 et des zones bars des voitures deux niveaux 4 mais selon l'encombrement effectif des différents composants de la chaîne de traction 8, celle-ci peut s'étendre en totalité ou en partie seulement sous le plancher des compartiments voyageurs 10 ou des zones bars.

Chacune des voitures intermédiaires 3a est munie d'un pantographe 12 pour capter l'énergie électrique sur une ligne caténaire (non représentée).

Un câble de haute tension (non représentée)distribue l'énergie électrique captée par chaque pantographe 12 à la chaîne de traction 8 située dans la voiture deux niveaux motorisée 4. En pratique, ces câbles s'étendent par exemple en toiture.

La concentration des chaînes de traction 8 et des bogies moteurs 6 sur un nombre très limité de voitures permet de limiter la masse des câbles nécessaires, puisque seuls des câbles de haute tension s'étendent entre les voitures intermédiaires 3a et la chaîne de traction 8 des voitures deux niveaux motorisées 4. Une conséquence est que ces câbles ont une masse moins importante que la masse des câbles de puissance des architectures des automotrices de l'art antérieur. La complexité du câblage est également nettement réduite.

### Variantes du premier mode de réalisation

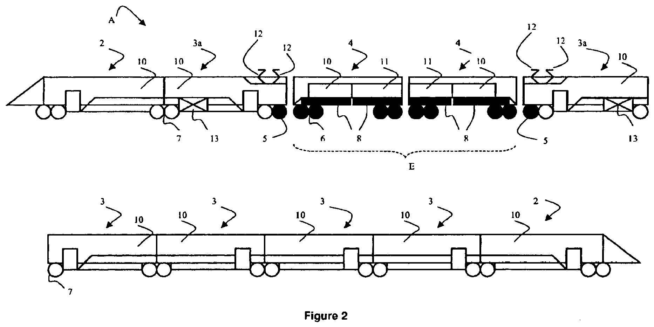

La figure 2 montre l'automotrice A précédente avec le même nombre de voitures mais dans laquelle les voitures intermédiaire 3a et les voitures deux niveaux motorisées 4 sont disposées adjacentes à la première voiture pilote 2.

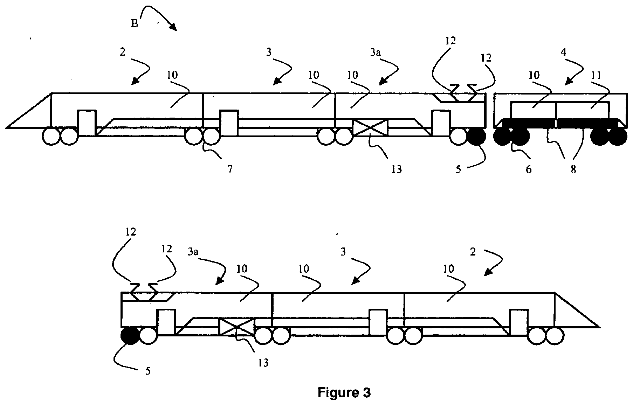

La figure 3 montre une automotrice B avec un nombre restreint de voitures dans laquelle une seule voiture deux niveaux motorisée 4 est disposées entre les voitures intermédiaire 3a.

Il est claire que selon d'autres modes de réalisation, non représentés, les voitures intermédiaire 3a et les voitures deux niveaux motorisées 4 sont disposées adjacentes, telles que décrites dans la présente demande et représentées dans les figures, et sont positionnées de façon quelconque au sein de l'automotrice.

### Deuxième mode de réalisation

Pour une automotrice plus courte que l'automotrice décrite dans le premier mode de réalisation ci-dessus ou roulant à des vitesses moindres et donc comportant un moins grand nombre de chaînes de traction ou des chaînes de traction de masse moins élevée, il est avantageux, soit de diminuer le nombre de bogies moteurs tout en maintenant le nombre de bogie, soit de supprimer certains bogies moteurs.

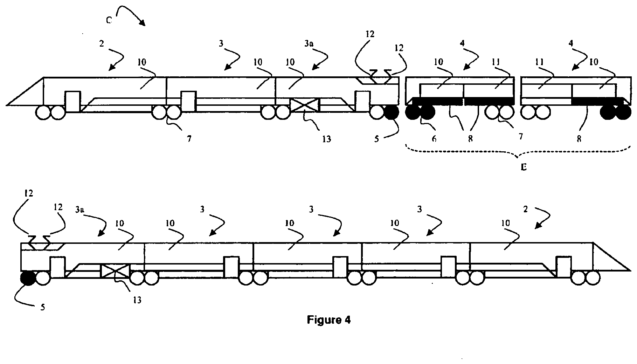

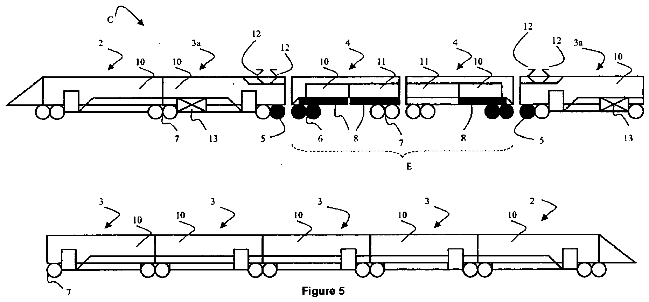

Ainsi, dans le mode de réalisation représenté sur les figures 4 et 5, sur laquelle les références aux éléments semblables à ceux de la figure 1 ont été conservées, une automotrice C se distingue de celle des modes de réalisation précédents en ce que les voitures deux niveaux 4 constituant l'ensemble E comportent un moins grand nombre de bogies moteurs. Les voitures deux niveaux 4 sont ici portées chacune par un bogie moteur 6 et un bogie porteur 7 disposés à leurs extrémités. De façon avantageuse, les bogies moteurs sont disposés aux extrémités adjacentes avec les voitures intermédiaires 3a.

Comme le véhicule est essentiellement articulé et partiellement non articulé, l'automotrice C de la figure 4 (ou 5) possède quatorze bogies, deux bogies motorisés 6, huit bogies porteurs 7 et deux bogies partiellement motorisés, pour une longueur d'environ 200 m. Dans ce mode de réalisation, seuls deux bogies des voitures deux niveaux 4 sont motorisés. Une telle automotrice peut transporter de l'ordre de 550 passagers, en fonction de l'aménagement intérieur, à une vitesse commerciale d'au moins 250 km/h.

### Troisième mode de réalisation

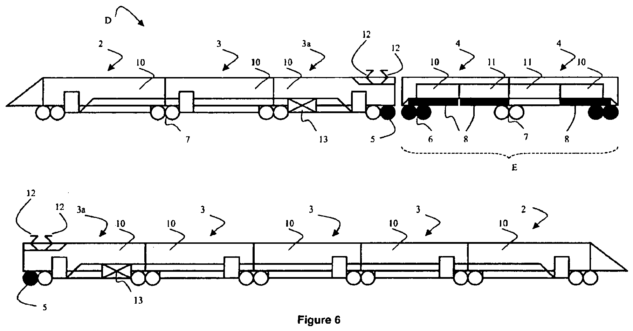

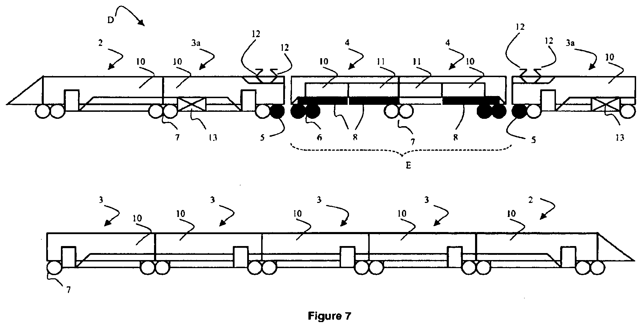

Dans le mode de réalisation représenté sur les figures 6 et 7, sur laquelle les références aux éléments semblables à ceux de la figure 1 ont été conservées, l'automotrice D comporte des voitures deux niveaux 4 également avec un moins grand nombre de bogies moteurs. Les voitures deux niveaux 4 sont ici en liaison articulée à leurs extrémités adjacentes et sont donc portées chacune par un bogie moteur 6 et un bogie porteur 7 commun aux deux voitures deux niveaux 4. De façon avantageuse, les bogies moteurs sont disposés aux extrémités adjacentes avec les voitures intermédiaires 3a.

### Variantes aux différents modes de réalisation

Comme décrit dans le premier mode de réalisation, dans chacun des autres modes de réalisation et des variantes précédents, les voitures intermédiaires 3a sont susceptibles de recevoir des équipements électriques auxiliaires 13.

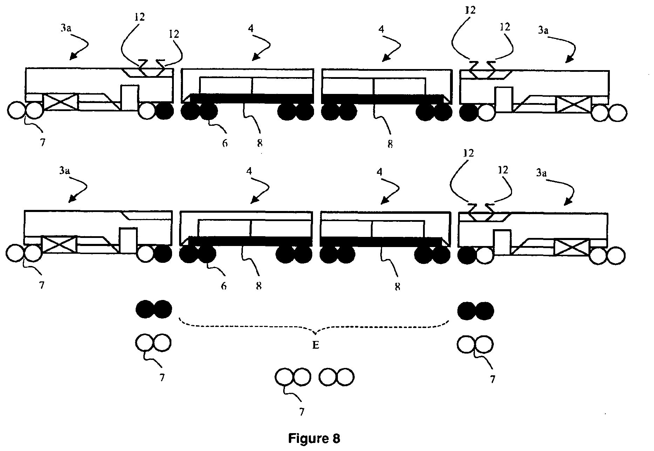

Les figures 8 à 10 représentent sous une forme simplifiée des configurations possibles des bogies moteurs 6 et des bogies porteurs 7 de l'automotrice selon les différents modes de réalisation données à titre d'exemple. Sont seulement représentés et numérotés les voitures intermédiaires 3a, les voitures deux niveaux motorisées 4, les chaînes de traction 8, les bogies moteurs 6, les bogies porteurs 7 et les pantographes 12.

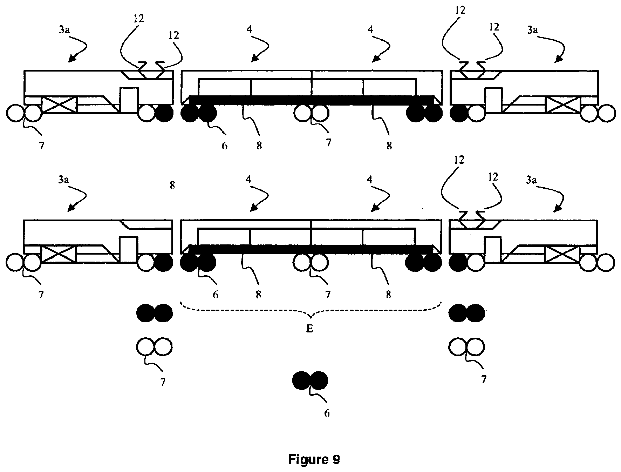

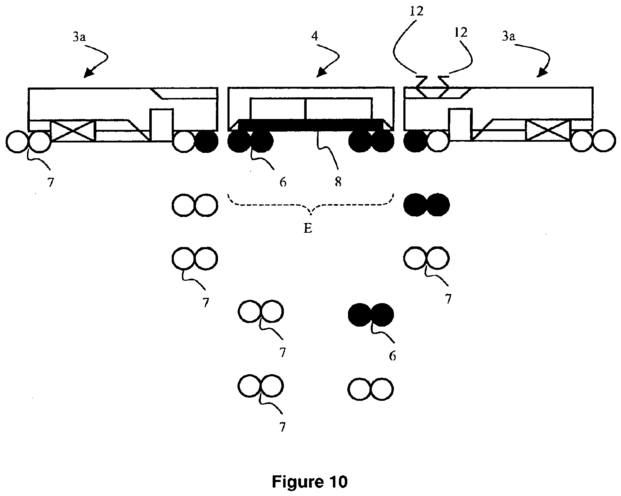

Les figures 8 à 10 représentent les combinaisons possibles entre chaînes de traction 8, bogies moteurs 6, bogies porteurs 7 et pantographes 12 pour chaque mode de réalisation : voitures deux niveaux motorisées 4 ayant chacune un bogie dédié à chacune de leurs extrémités et voitures deux niveaux 4 en liaison articulée à leurs extrémités adjacentes. La figure 10 concerne une automotrice qui ne fait pas partie de l'invention. Sur les figures 8 et 9, les variantes dans lesquelles la voiture intermédiaire adjacente 3a ne comporte pas d'essieu moteur de font pas partie de l'invention.

Ainsi, l'automotrice réalisée selon l'invention est complètement modulable en terme de capacité voyageurs et de vitesse puisqu'elle peut comprendre, par exemple, sept à onze voitures, trois ou quatre chaînes de traction 8, de six à douze essieux moteurs 5 répartis sur trois à six bogies moteurs 6 et peut atteindre une vitesse maximale comprise entre 140 et 350 km/h.

Cette modularité est atteinte par la simplification des types de voitures (pilotes 2, remorques 3 et motorisée 4) tout en appliquant la règle d'alternance des remorques et des voitures recevant une chaîne de traction 8 et la règle d'alternance des bogies moteurs 6 et des bogies porteurs 7 pour respecter la charge maximale à l'essieu.

## Revendications

1. Automotrice de transport de voyageurs, au moins partiellement à deux niveaux et à motorisation répartie comportant successivement :
- une première voiture pilote (2) dépourvue de chaîne de traction, puis au moins une voiture intermédiaire (3) dépourvue de chaîne de traction,
- une voiture intermédiaire adjacente (3a),
- un ensemble (E) constitué de voitures deux niveaux (4) au moins partiellement motorisé, au moins une chaîne de traction (8) étant disposée dans chaque voiture deux niveaux,
- une voiture intermédiaire adjacente (3a),
- puis au moins une voiture intermédiaire (3) dépourvue de chaîne de traction et une seconde voiture pilote (2) dépourvue de chaîne de traction,
- chaque voiture intermédiaire adjacente (3a) est immédiatement adjacente à l'ensemble (E), et l'extrémité desdites voitures intermédiaires (3a) immédiatement adjacentes auxdites voitures deux niveaux (4) dudit ensemble (E) comportent au moins un essieu motorisé (5),
- les extrémités adjacentes desdites voitures deux niveaux (4) dudit ensemble (E) étant toutes articulées ou toutes non-articulées,
- l'extrémité de chacune des voitures (4) extrêmes dudit ensemble (E) et de la voiture intermédiaire (3a) qui lui est adjacente étant non-articulée.

2. Automotrice selon la revendication 1, dans laquelle l'ensemble des voitures (2, 3, 3a, 4) sont à deux niveaux.

3. Automotrice selon la revendication 1, dans laquelle les voitures (2,3,3a) autres que les voitures deux niveaux (4) sont à un niveau.

4. Automotrice selon l'une des revendications précédentes, **caractérisée en ce que** chaque voiture intermédiaire (3a) immédiatement adjacente aux voitures deux niveaux (4) d'extrémité de l'ensemble (E) est en appui sur un bogie dédié et un bogie commun avec une voiture intermédiaire (3) dépourvue de chaîne de traction.

5. Automotrice selon l'une des revendications précédentes, **caractérisée en ce que** chaque voiture pilote (2) dépourvue de chaîne de traction est en appui sur un bogie dédié et un bogie commun avec une autre voiture.

## Patentansprüche

1. Triebwagen zur Personenbeförderung, zumindest teilweise doppelstöckig und mit verteiltem Antrieb, der nacheinander aufweist:
- einen ersten Steuerwagen (2) ohne Antriebskette, dann zumindest einen Zwischenwagen (3) ohne Antriebskette,
- einen benachbarten Zwischenwagen (3a),
- eine Einheit (E), bestehend aus zumindest teilweise angetriebenen doppelstöckigen Wagen (4), wobei zumindest eine Antriebskette (8) in jedem doppelstöckigen Wagen angeordnet ist,
- einen benachbarten Zwischenwagen (3a),
- dann zumindest einen Zwischenwagen (3) ohne Antriebskette und einen zweiten Steuerwagen (2) ohne Antriebskette,
- wobei jeder benachbarte Zwischenwagen (3a) der Einheit (E) direkt benachbart ist und das Ende der den doppelstöckigen Wagen (4) der Einheit (E) direkt benachbarten Zwischenwagen (3a) zumindest eine motorisierte Achse (5) aufweist,
- wobei die benachbarten Enden der doppelstöckigen Wagen (4) der Einheit (E) alle angelenkt oder alle nicht angelenkt sind,
- wobei das Ende jedes der Endwagen (4) der Einheit (E) und des ihm benachbarten Zwischenwagens (3a) nicht angelenkt ist.

2. Triebwagen nach Anspruch 1, wobei alle Wagen (2, 3, 3a, 4) doppelstöckig sind.

3. Triebwagen nach Anspruch 1, wobei die Wagen (2, 3, 3a), die keine doppelstöckigen Wagen (4) sind, einstöckig sind.

4. Triebwagen nach einem der vorangehenden Ansprüche, **dadurch gekennzeichnet, dass** sich jeder den doppelstöckigen Endwagen (4) der Einheit (E) direkt benachbarter Zwischenwagen (3a) auf einem bestimmten Drehgestell und einem mit einem Zwischenwagen (3) ohne Antriebskette gemeinsamen Drehgestell abstützt.

5. Triebwagen nach einem der vorangehenden Ansprüche, **dadurch gekennzeichnet, dass** sich jeder Steuerwagen (2) ohne Antriebskette auf einem bestimmten Drehgestell und einem mit einem anderen Wagen gemeinsamen Drehgestell abstützt.

## Claims

1. A passenger transport electric railcar, at least partially with two levels and distributed motor means, successively including:
- a first pilot car (2) with no traction chain, then at least one intermediate car (3) with no traction chain,
- an adjacent intermediate car (3a),
- an assembly (E) made up of at least partially motorized two-level cars (4), at least one traction chain (8) being arranged in each two-level car,
- an adjacent intermediate car (3a),
- then at least one intermediate car (3) with no traction chain and a second pilot car (2) with no traction chain,
- each adjacent intermediate car (3a) is immediately adjacent to the assembly (E), and the end of said intermediate cars (3a) immediately adjacent to said two-level cars (4) of said assembly (E) include at least one motorized axle (5),
- the adjacent ends of said two-level cars (4) of said assembly (E) being all articulated or all non-articulated,
- the end of each of the end cars (4) of said assembly (E) and the intermediate car (3a) that is adjacent to it being non-articulated.

2. The electric railcar according to claim 1, wherein all of the cars (2, 3, 3a, 4) have two levels.

3. The electric railcar according to claim 1, wherein the cars (2, 3, 3a) other than the two-level cars (4) have one level.

4. The electric railcar according to one of the preceding claims, **characterized in that** each intermediate car (3a) immediately adjacent to the two-level end cars (4) of the assembly (E) bears on a dedicated bogie and a bogie shared with an intermediate car (3) with no traction chain.

5. The electric railcar according to one of the preceding claims, **characterized in that** each pilot car (2) with no traction chain bears on a dedicated bogie and a bogie shared with another car.
